# EUROPEAN PATENT SPECIFICATION

(11) **EP 2 030 851 B1**
(45) Date of publication and mention of the grant of the patent: **26.01.2011**
(21) Application number: 07017055.0
(22) Date of filing: 31.08.2007
(51) Int. Cl.: B60T 1/16, B62D 37/02

(54) **Motor vehicle having an improved braking system**
Kraftfahrzeug mit verbessertem Bremssystem
Véhicule à moteur ayant un système de freinage amélioré

(43) Date of publication of application: 04.03.2009
(73) Proprietor: GM Global Technology Operations, Inc., Detroit, MI 48265-3000 (US)
(72) Inventor: Sandén, Ulf, 46142 Trollhättan (SE)
(74) Representative: Daniel, Ulrich W.P.

(56) References cited:
- DE-A1- 10 102 211
- DE-A1-102005 024 360
- US-A- 4 160 494
- US-B1- 7 226 119

## Description

The present invention relates to a road motor vehicle, in particular to its braking system.

It is widely known to equip motor vehicles with aerodynamically active surfaces known as spoilers, which, when exposed to headwind when the vehicle is moving, generate a downward thrust on the vehicle. Such spoilers are useful for improving the grip of the vehicle on a road surface, in particular when driving at high speeds. The thrust they generate also increases the friction between the vehicle and the ground when braking, so that a strong deceleration can be achieved. However, conventional spoilers have a disadvantage in that they increase the fuel consumption of the vehicle, since part of the motor power is used for generating an upward air current which, in return, exercises the downward thrust on the vehicle. Further, there are only a few locations on conventional vehicle bodies where spoilers can be mounted without obstructing a driver's view.

US 4 160 494 discloses a motor vehicle in which a front hood can be raised in order to produce a braking effect by fluid-dynamic resistance and to enhance conventional braking action by producing a downward pressure on the vehicle. To this effect, the hood is pivoted into a backward-tilted position in which headwind hits the underside of the hood and presses it downward. This design is inherently dangerous for pedestrians. If the hood opens when the vehicle is involved in an accident with a pedestrian, and the pedestrian hits the front edge of the hood or the motor of the vehicle, there is a high risk of mortal injury.

US 6 293 362 B1 discloses a motor vehicle in which a front hood is raised in case of an accident as a measure of protection for pedestrians.

The object of the present invention is to provide a motor vehicle which uses an aerodynamically active surface for increasing braking efficiency, in particular in emergency situations where a strong deceleration is needed most, while being inherently safe for pedestrians.

This object is achieved by a motor vehicle as defined in claim 1.

In order to bring the aerodynamically active surface into its active position very quickly in case of need, the controller may comprise actuators of pyrotechnical or spring-load type for displacing the surface.

Further, the braking system may comprise an emergency braking assistance subsystem. Such subsystems are conventionally used to control the braking force of wheel brakes of a vehicle in case of an emergency braking operation to the highest value possible without causing the wheels to block. According to the invention, the controller is adapted to displace the aerodynamically active surface and its active position in case of an emergency braking being detected. In this way, the downward thrust of the aerodynamically active surface increases the load on the vehicle wheels and, hence, the maximum braking force that can be applied to the wheels.

An emergency braking may be judged to occur if the speed of operation of a brake pedal exceeds a given threshold, or if a force exercised by a driver on the brake pedal exceeds a given threshold.

Further features and advantages of the invention will become apparent from the subsequent description of embodiments thereof referring to the appended drawings.
- Fig. 1: is a perspective view of a motor vehicle in an emergency braking situation; and;
- Fig. 2: is a block diagram of the braking system of a vehicle.

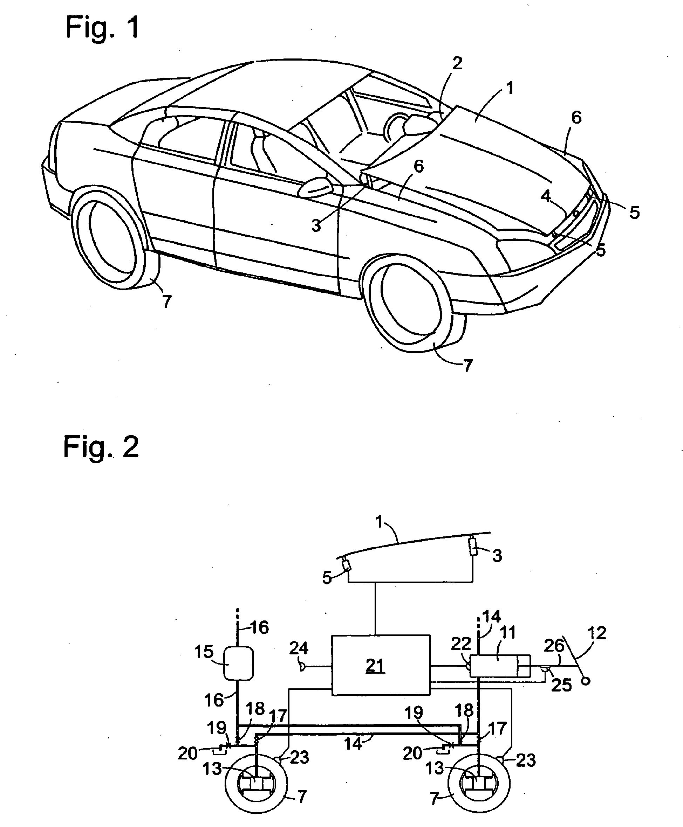

Fig. 1 is a perspective view of a motor vehicle having a front hood 1 which, under normal conditions, would be flush with adjacent left and right wings 6.

In the Fig. the front hood 1 is shown in a raised position in which it is held above the adjacent surfaces of the wings 6 by actuators 3, 5 located at fore and aft edges 4, 2 of the hood 1. The actuators can be of any conventional type, preferably they are pyrotechnical actuators which are caused to expand, yielding the configuration shown in fig. 1 by triggered explosion of a pyrotechnical load, or spring-load actuators in which a pre-stressed spring is unlatched in order to expand the actuators.

The range of the rear actuators 3 is greater than that of the front actuators 5, so that in the active position of Fig. 1, the frontward slope of hood 1 is stronger than in the normal position. In this way, when the hood 1 is raised, the downward thrust exercised on it by the headwind is significantly stronger, increasing the load carried by the front wheels 7.

Fig. 2 is a block diagram of a braking system according to the invention. In the embodiment shown in Fig.2, brake fluid in a cylinder 11 is pressurized in a conventional manner by a driver's foot pressing a brake pedal 12. The cylinder 11 communicates with brake cylinders 13 in the wheels 7 of the vehicle by fluid lines 14. A reservoir 15 containing pressurized brake fluid is connected to the brake cylinders 13 by a line 16. Valves 17, 18, 19 placed between brake pedal cylinder 11 and each brake cylinder 13, between the pressurized reservoir system and the brake cylinders 13 and between these and a relief opening 20 are controlled by an electronic control circuit 21. Control circuit 21 is connected to a pressure sensor 22 at cylinder 11 for receiving pressure data from pressure sensor 2 and to wheel speed sensors 23 for detecting the rotational speed of each wheel 7. The control circuit 21 may implement an anti-blocking system by monitoring the speed of rotation of each wheel 7 and decreasing the pressure in each brake cylinder 13 if an unexpected decrease of the rotational speed of a wheel 7 has been detected.

Control circuit 21 further implements a braking assistance subsystem by judging based on pressure data from sensor 22, whether a violent operation of brake pedal 12 has occurred, which would indicate an emergency. If the control circuit 21 decides that there is an emergency, it starts an emergency braking procedure by closing valves 17 between cylinder 11 and the brake cylinders 13 and then controls valves 18, 19 so as to keep each brake cylinder 13 at a pressure close to that of reservoir 15 and as high as possible without causing the wheels 7 to block. In this way the vehicle is brought to a stop at the highest possible deceleration rate, regardless of the force exercised on brake pedal 12 by the driver after the emergency braking procedure has started.

According to another embodiment, pressure sensor 22 may be replaced by a displacement sensor 25, shown in phantom in Fig. 1, close to the piston rod 26 extending between brake pedal 12 and a piston of cylinder 11 for monitoring the displacement speed of piston rod 26. Based on output from displacement sensor 25 the control circuit 21 of this embodiment is adapted to determine the speed of the piston rod 26 and to judge that there is an emergency braking if this speed exceeds a predetermined limit.

According to another preferred embodiment, control circuit 21 has an acceleration or shock sensor 24 connected to it which enables control circuit 21 to judge whether the vehicle is involved in an accident. If control circuit 21 judges that there is an accident, it will also ignite the actuators 3, 5, in order to raise the hood 1, whereby the space between hood 1 and a motor block underneath is increased and the risk for a pedestrian crashing on hood 1 of being fatally injured is reduced.

### List of reference signs

- 1: front hood
- 2: edge
- 3: actuator
- 4: edge
- 5: actuator
- 6: wing
- 7: wheel
- 8:
- 9:
- 10:
- 11: cylinder
- 12: brake pedal
- 13: brake cylinder
- 14: fluid line
- 15: reservoir
- 16: line
- 17: valve
- 18: valve
- 19: valve
- 20: relief opening
- 21: control circuit
- 22: pressure sensor
- 23: wheel speed sensor
- 24: shock sensor
- 25: displacement sensor
- 26: piston rod

## Claims

1. A road motor vehicle having an aerodynamically active front hood (1) which is subject to downward thrust by the head wind and is displaceable between a normal position and an active position in which it is subject to a stronger thrust than in the normal position, a braking system (11-26) and a controller (21, 3, 5) that is adapted to raise the front hood (1) into the active position if the braking system (11-26) is operated, **characterized in that** by raising the front hood (1) from the normal position to the active position, the space between the front hood (1) and a motor block underneath is increased, and a frontward slope of the front hood (1) is higher in the active position than in the normal position.

2. The road motor vehicle of claim 1, wherein the controller (21) comprises actuators (3, 5) of pyrotechnical or spring-load type for displacing the front hood (1) into the active position.

3. The road motor vehicle of claim 1 or 2, wherein the braking system (11-26) comprises an emergency braking assistance subsystem (15-22, 25), the controller (21) being adapted to displace the front hood (1) into its active position in case of the emergency braking assistance subsystem detecting an emergency braking.

4. The road motor vehicle of any of claims 1 to 3, wherein the braking system comprises a speed sensor (25) for detecting the speed of actuation of a brake pedal and is adapted to bring the front hood (1) into its active position in case of the detected speed exceeding a given threshold.

5. The road motor vehicle of any of claims 1 to 3, wherein the braking system comprises a force sensor (22) for detecting a peak force exercised on a brake pedal (12) and is adapted to bring the front hood (1) into its active position in case of the detected force exceeding a given threshold.

## Patentansprüche

1. Straßenkraftfahrzeug mit einer aerodynamisch aktiven Fronthaube (1), die durch den Gegenwind einer abwärtsgerichteten Schubkraft unterworfen wird und zwischen einer Normalstellung und einer aktiven Stellung beweglich ist, in der sie einer stärkeren Schubkraft als in der Normalstellung ausgesetzt ist, einem Bremssystem (11-26) und einem Regler (21, 3, 5), der geeignet ist, die Fronthaube (1) in die aktive Stellung zu heben, wenn das Bremssystem (11-26) betätigt wird, **dadurch gekennzeichnet, dass** durch das Heben der Fronthaube (1) von der Normalstellung in die aktive Stellung der Raum zwischen der Fronthaube (1) und einem darunter befindlichen Motorblock vergrößert wird, und dass eine Vorwärtsneigung der Fronthaube (1) in der aktiven Stellung stärker ist als in der Normalstellung.

2. Straßenkraftfahrzeug nach Anspruch 1, wobei der Regler (21) Betätigungsvorrichtungen (3, 5) vom pyrotechnischen Typ oder Federbelastungstyp umfasst, um die Fronthaube (1) in die aktive Stellung zu bewegen.

3. Straßenkraftfahrzeug nach Anspruch 1 oder 2, wobei das Bremssystem (11-26) ein unterstützendes Subsystem für Notbremsungen (15-22, 25) umfasst, wobei der Regler (21) geeignet ist, die Fronthaube (1) in ihre aktive Stellung zu bewegen, wenn das unterstützende Subsystem für Notbremsungen eine Notbremsung erkennt.

4. Straßenkraftfahrzeug nach einem der Ansprüche 1 bis 3, wobei das Bremssystem einen Geschwindigkeitssensor (25) umfasst, um die Geschwindigkeit der Betätigung eines Bremspedals festzustellen, und geeignet ist, die Fronthaube (1) in ihre aktive Stellung zu bringen, wenn die festgestellte Geschwindigkeit eine gegebene Schwelle übersteigt.

5. Straßenkraftfahrzeug nach einem der Ansprüche 1 bis 3, wobei das Bremssystem einen Kraftsensor (22) umfasst, um eine Spitzenkraft zu erkennen, die auf ein Bremspedal (12) ausgeübt wird, und geeignet ist, die Fronthaube (1) in ihre aktive Stellung zu bringen, wenn die festgestellte Kraft eine gegebene Schwelle übersteigt.

## Revendications

1. Véhicule à moteur routier ayant un capot avant (1) actif du point de vue aérodynamique qui est soumis à une poussée vers le bas par le vent de face et peut être déplacé entre une position normale et une position active dans laquelle il est soumis à une plus forte poussée que dans la position normale, un système de freinage (11-26) et un contrôleur (21, 3, 5) adapté pour relever le capot avant (1) dans la position active si le système de freinage (11-26) est actionné, **caractérisé en ce qu'**en relevant le capot avant (1) de la position normale à la position active, l'espace entre le capot avant (1) et un bloc moteur situé en dessous est augmenté, et une pente vers l'avant du capot avant (1) est plus forte dans la position active que dans la position normale.

2. Véhicule à moteur routier selon la revendication 1, dans lequel le contrôleur (21) comprend des actionneurs (3, 5) de type pyrotechnique ou à contrainte par ressort pour déplacer le capot avant (1) dans la position active.

3. Véhicule à moteur routier selon la revendication 1 ou 2, dans lequel le système de freinage (11-26) comprend un sous-système d'assistance au freinage d'urgence (15-22, 25), le contrôleur (21) étant adapté pour déplacer le capot avant (1) dans sa position active si le sous-système d'assistance au freinage d'urgence détecte un freinage d'urgence.

4. Véhicule à moteur routier selon l'une quelconque des revendications 1 à 3, dans lequel le système de freinage comprend un capteur de vitesse (25) destiné à détecter la vitesse d'actionnement d'une pédale de frein et est adapté pour amener le capot avant (1) dans sa position active si la vitesse détectée dépasse un seuil donné.

5. Véhicule à moteur routier selon l'une quelconque des revendications 1 à 3, dans lequel le système de freinage comprend un capteur de force (22) destiné à détecter une force maximale exercée sur une pédale de frein (12) et est adapté pour amener le capot avant (1) dans sa position active si la force détectée dépasse un seuil donné.
